# EUROPÄISCHE PATENTSCHRIFT

(11) **EP 1 103 712 B1**
(45) Veröffentlichungstag und Bekanntmachung des Hinweises auf die Patenterteilung: **09.02.2005**
(21) Anmeldenummer: 00120060.9
(22) Anmeldetag: 15.09.2000
(51) Int. Cl.: F02F 1/16

(54) **Zylinderkopf für eine Brennkraftmaschine**
Cylinder head for an internal combustion engine
Culasse de moteur à combustion interne

(30) Priorität: 25.11.1999 DE 19956825
(43) Veröffentlichungstag der Anmeldung: 30.05.2001
(73) Patentinhaber: Dr.Ing. h.c.F. Porsche Aktiengesellschaft, 70435 Stuttgart (DE)
(72) Erfinder: Paul, Michael, 71287 Weissach (DE)

(56) Entgegenhaltungen:
- EP-A- 0 594 462
- US-A- 5 113 829
- US-A- 5 943 993

## Beschreibung

Die Erfindung betrifft Zylinderköpfe für eine Brennkraftmaschine nach dem Oberbegriff des Patentanspruchs 1.

Brennkraftmaschinen der Ottobauart mit Saugrohreinspritzung oder Direkteinspritzung weisen beachtliche Entwicklungspotentiale u.a. bezüglich Abgasemissionen und Kraftstoffverbrauch auf. Für die Hersteller dieser Brennkraftmaschinen kann dies bedeuten, daß sie künftig beide Einspritzsysteme für unterschiedliche Typen von Brennkraftmaschinen mit Saugrohreinspritzung oder Direkteinspritzung -, jedoch bspw. gleicher Zylinderzahl, einsetzen.

Es ist eine Brennkraftmaschine bekannt, EP 0 594462 A1, die mit Saugrohreinspritzung arbeitet. Dabei ist in einem Saugrohr, das zu einem Einlassventil und einem Brennraum führt, eine Einspritzdüse vorgesehen.

Aus der DE 19804 161 A1, geht eine Brennkraftmaschine mit Direkteinspritzung hervor, die eine in einen Brennraum mündende Einspritzdüse umfasst. Der Brennraum wird durch einen profilierten Kolbenboden und eine giebeldachförmige Decke eines Zylinderkopfs gebildet. Der Zylinderkopf ist mit V-förmig angeordneten Einlass- und Auslassventilen und einer zwischen letzteren sich erstreckenden zentralen Zündkerze versehen.

In der US 5,943,993 wird eine Brennkraftmaschine mit Direkteinspritzung behandelt, bei der ein Einlassventil und ein Auslassventil in einem Zylinderkopf einen Ventilwinkel einschließen. Dabei verläuft eine Zündkerze zwischen Einlassventil und Auslassventil, und ein Einspritzventil ist im spitzen Winkel zu einer Ebene angeordnet, die sich zwischen einem Zylindergehäuse und dem Zylinderkopf erstreckt.

Aufgabe der Erfindung ist es, Zylinderköpfe so auszulegen, dass sie unter Berücksichtigung baulicher Gegebenheiten für unterschiedliche Brennkraftmaschinen mit Saugrohreinspritzung oder Direkteinspritzung geeignet ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die erste Zylinderkopfvariante und die zweite Zylinderkopfvariante aufgrund übereinstimmender Konstruktionsmerkmale mit gleichen Fertigungs- und Montageeinrichtungen hergestellt werden, was sich kostenreduzierend auswirkt. So ist es möglich, dass ein und derselbe Hersteller von Brennkraftmaschinen eine Grundkonzeption einer Brennkraftmaschine z.B. mit einem Kurbelgehäuse, das sechs Zylinder aufweist, darstellt, wobei an besagtem Kurbelgehäuse je nach Einspritzart - Saugrohreinspritzung oder Direkteinspritzung - die erste Zylinderkopfvariante oder die zweite Zylinderkopfvariante montiert wird. Darüber hinaus können bei beiden Zylinderkopfvarianten gleichartige und/oder bewährte Konstruktionsprinzipen - Auslass - Einlasskanäle, Kühlwasserkanäle, Ventilwinkel - vorgesehen sein. Denkbar ist auch für diese Zylinderkopfvariante Gleichteile wie bspw. Tassenstössel, Ventilführungen oder dergl. einzusetzen. Schließlich ist die zweite Zylinderkopfvariante dann einfach konstruierbar, wenn sie gegenüber der ersten Zylinderkopfvariante über eine erste Längsseite um einen definierten Betrag gekippt ist und an der zweiten Längsseite die Einspritzventile angebracht sind.

In der Zeichnung sind Ausführungsbeispiele der Erfindung dargestellt, das nachstehend näher beschrieben sind.

Es zeigen
- Fig. 1: einen Teilquerschnitt einer Brennkraftmaschine im Bereich einer ersten Zylinderkopfvariante,
- Fig. 2: eine Ansicht entsprechend Fig. 1 mit einer zweiten Zylinderkopfvariante,
- Fig. 3: eine Ansicht entsprechend Fig. 1 mit einer weiteren zweitenZylinderkopfvariante

Eine Brennkraftmaschine 1 der Ottobauart umfasst in dem dargestellten Bereich ein Zylindergehäuse 2 mit wenigstens einem Zylinder 3 in dem ein nicht gezeigter Kolben Hubbewegungen ausübt. Mit dem Zylindergehäuse 2 verbunden ist ein Zylinderkopfsystem 4, wobei beide in einer Ebene A - A zusammengesetzt sind. Das Zylinderkopfsystem 4 weist Konstruktionsmerkmale auf, die sowohl für eine erste Zylinderkopfvariante 5 mit Saugrohreinspritzung wie auch für eine zweite Zylinderkopfvariante 6 mit Direkteinspritzung geeignet sind.

Die erste Zylinderkopfvariante 5 weist pro Zylinder 3 zumindest ein Einlassventil 7 und ein Auslassventil 8 auf, die einen Ventilwinkel α einschließen. Das Einlassventil 7 steuert ein über einen Ansaugkanal 9 zu einem Brennraum 10 zu führendes Kraftstoff-Luftgemisch, wobei in den Ansaugkanal 9 mittels einer nicht gezeigten Einspritzdüse Kraftstoff eingesprüht wird. Mittels des Auslassventils 8 und eines Auslasskanals 11, werden im Brennraum 10 erzeugte Abgase abgeführt. Das Einlassventil 7 und das Auslassventil 8 werden mit Nockenwellen 12, 13 betätigt. Zwischen den in Lagerbohrungen 14, 15 von Lagerstühlen 16, 17 der ersten Zylinderkopfvariante 5 aufgenommenen Nockenwellen 12, 13 und dem Einlassventil 7 sowie dem Auslassventil 8 sind Tassenstößel 18, 19 vorgesehen, die mit Ventilschäften 20, 21 des Einlassventils 7 und des Auslassventils 8 zusammenarbeiten. An Enden 22, 23 der Ventilschäfte 20,21 sind Federteller 24, 25 angebracht. Zwischen den Federtellern 24, 25 und Anschlägen 26, 27 der ersten Zylinderkopfvariante 5 sind Ventilfedern 28, 29 wirksam, die das Einlassventil 7 und das Auslassventil 8 in Endlagen zu bewegen suchen. Dabei sind deren Ventilschäfte 20, 21 von Ventilführungen 30, 31 umgeben, die in der ersten Zylinderkopfvariante 5 festgesetzt sind.

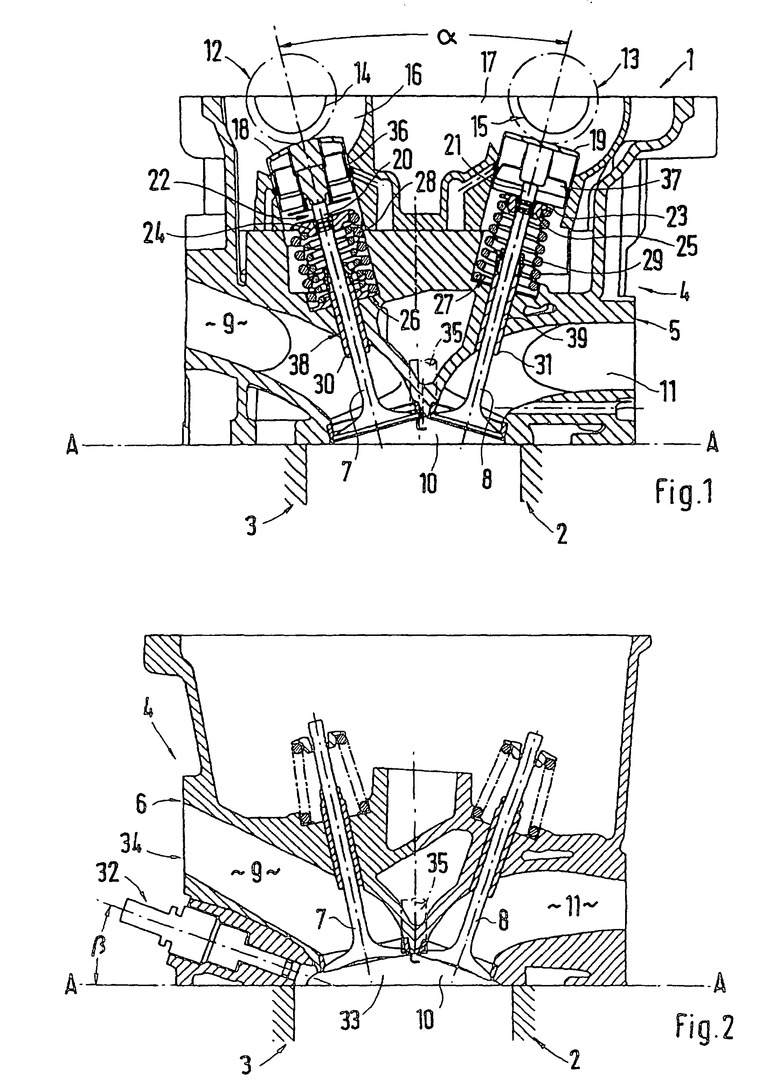

In Fig. 2 ist die zweite Zylinderkopfvariante 6 dargestellt, die für Direkteinspritzung ausgebildet ist. Ungeachtet der unterschiedlichen Einspritzsysteme weisen die erste Zylinderkopfvariante 5 und die zweite Zylinderkopfvariante 7 übereinstimmende Konstruktionsmerkmale auf. So entspricht der Ventilwinkel α der ersten Zylinderkopfvariante 5 dem Ventilwinkel α' der zweiten Zylinderkopfvariante 6. Außerdem weist die zweite Zylinderkopfvariante 6 ein oder mehrere Einspritzdüsen 32 auf, die direkt in einen Brennraum 33 münden und von einer aufrechten Längsseite 34 der besagten zweiten Zylinderkopfvariante 6 aus eingesetzt sind. Dabei verlaufen die Einspritzdüsen 32 im spitzen Winkel β zur Ebene A - A.

Das in den Brennraum 10 bzw. 33 eingebrachte Kraftstoff-Luftgemisch wird mit einer Zündkerze 35 entflammt, die zwischen dem Einlassventil 7 und dem Auslassventil 8 verläuft, und zwar gleichgerichtet zu einer Mittellängsebene B - B des Zylinders 3, dergestalt, dass die Zündkerze 35 im Brennraum 10 bzw. 33 eine zentrale Lage einnimmt. Diese Konstruktionsmerkmale sind sowohl in der ersten Zylinderkopfvariante 5 wie auch in der zweiten Zylinderkopfvariante 6 in gleicher oder ähnlicher Form vorgesehen. Sinngemäß gilt dies auch für die Konstruktionsmerkmale die Lagerbohrungen 14,15 in den Lagerstühlen 16,17, Bohrungen 36,37 der Tassenstößel 18,19, Bohrungen 38,39 der Ventilführungen 30,31 oder dergl. Diese Maßnahmen ermöglichen, dass eine Reihe von Komponenten - Tassenstößel, Ventilführungen - als Gleichteile bei der ersten Zylinderkopfvariante 5 und der zweiten Zylinderkopfvariante 6 einsetzbar sind.

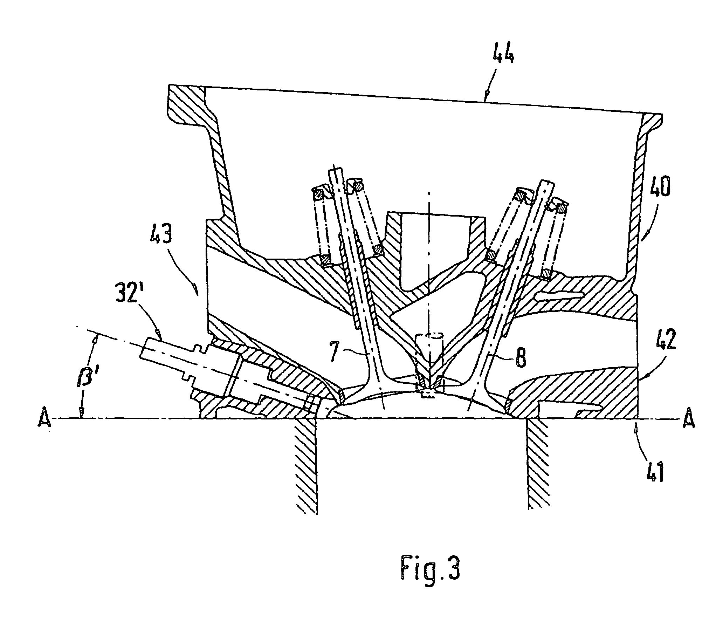

Gemäß Fig. 3 ist die zweite Zylinderkopfvariante 40 über eine auf der Ebene A - A aufliegende Grundkante 41 einer ersten Längsseite 42 gekippt und an der gegenüberliegenden Längsseite 43 der zweiten Zylinderkopfvariante 40 sind die Einspritzdüsen 32' vorgesehen. Diese Einspritzdüsen 32' sind relativ nahe an die Ebene A - A herangeführt, und sie verlaufen im spitzen Winkel β' zu besagter Ebene. Bei dieser Ausführungsform ist eine der Ebene A - A gegenüberliegende Seite 44 als schiefe Ebene ausgebildet, die aus dem Kippen über die Grundkante 41 resultiert.

## Patentansprüche

1. Serie von Zylinderköpf für eine Brennkraftmaschine mit Ein- und Auslassventilen zur Gaswechselsteuerung in Brennräumen der Zylinderköpfe, welche Ventile mittels wenigstens einer Nockenwelle betätigt werden, **dadurch gekennzeichnet, dass** ein die Einlassventile (7) und die Auslassventile (8) umfassendes Zylinderkopfsystem (4) Konstruktionsmerkmale aufweist, die sowohl für eine erste Zylinderkopfvariante (5) mit Saugrohreinspritzung wie auch für eine zweite Zylinderkopfvariante (6) mit Direkteinspritzung geeignet sind, dergestalt, dass zumindest die Konstruktionsmerkmale Ventilwinkel (α, α') zwischen den Einlassventilen (7) und den Auslassventilen (8) der ersten Zylinderkopfvariante (5) und der zweiten Zylinderkopfvariante (6) übereinstimmen, wobei nur die zweite Zylinderkopfvariante (6) mit einer oder mehreren Öffnungen verschen ist, für eine oder mehrere von einer Längsseite(34) der zweiten Zylinderkopfvariante (6) aus eingesetzten Einspritzdüsen (32), die mit spitzem Winkel (β) zu einer zwischen der zweiten Zylinderkopfvariante (5) und einem Zylindergehäuse (2) sich erstreckenden Ebene (A-A) verlaufen.

2. Zylinderköpfe nach Anspruch 1, **dadurch gekennzeichnet, dass** die Konstruktionsmerkmale zentrale Lage einer oder mehrerer Zündkerzen (35) zwischen den Einlassventilen (7) und den Auslassventilen (8) der ersten Zylinderkopfvariante (5) und der zweiten Zylinderkopfvariante (6) übereinstimmen.

3. Zylinderköpfe nach Anspruch 1, **dadurch gekennzeichnet, daß** die Konstruktionsmerkmale Lagerbohrungen (14,15) in Lagerstühlen (16,17) für Nockenwellen (12,13), Bohrungen (38,39) für Tassenstößel (36,37), Bohrungen (36,37) für Ventilführungen (30,31 ) oder dergl. der ersten Zylinderkopfvariante (5) und der zweiten Zylinderkopfvariante (6) übereinstimmen.

4. Zylinderköpfe nach einem oder mehreren der vorangehenden Ansprüche, **dadurch gekennzeichnet, dass** die Tassenstößel (36,37), die Ventilführungen (30,31 ) oder dergl. für die erste Zylinderkopfvariante (5) und die zweite Zylinderkopfvariante (6) Gleichteile sind.

5. Zylinderköpfe nach einem oder mehreren der vorangehenden Ansprüche, **dadurch gekennzeichnet, dass** die zweite Zylinderkopfvariante (40) über eine auf der Ebene (A-A) aufliegende Grundkante (41) einer ersten Längsseite (42) der zweiten Zylinderkopfvariante (40) gekippt ist, wobei an der gegenüberliegenden zweiten Längsseite (43) der zweiten Zylinderkopfvariante (40) die Einspritzdüsen (32') vorgesehen sind.

6. Zylinderkopf nach Anspruch 5, **dadurch gekennzeichnet, dass** die entfernt von der Ebene (A-A) liegende Seite (44) der zweiten Zylinderkopfvariante (40) als schiefe Ebene ausgeführt ist.

## Claims

1. A series of cylinder heads for an internal-combustion engine with intake and exhaust valves for gas-exchange control in combustion chambers of the cylinder heads, which valves are actuated by means of at least one camshaft, **characterized in that** a cylinder-head system (4) comprising the intake valves (7) and the exhaust valves (8) has design features which are suitable both for a first cylinder-head variant (5) with manifold injection and for a second cylinder-head variant (6) with direct injection, in such a way that at least the design features of the valve angles (α, α') between the intake valves (7) and the exhaust valves (8) of the first cylinder-head variant (5) and of the second cylinder-head variant (6) coincide, wherein only the second cylinder-head variant (6) is provided with one or more openings, for one or more injection nozzles (32) which are inserted from a longitudinal side (34) of the second cylinder-head variant (6) and which extend at an acute angle (β) to a plane (A-A) extending between the second cylinder-head variant (5) and a cylinder housing (2).

2. Cylinder heads according to Claim 1, **characterized in that** the design features of a central position of one or more spark plugs (35) between the intake valves (7) and the exhaust valves (8) of the first cylinder-head variant (5) and of the second cylinder-head variant (6) coincide.

3. Cylinder heads according to Claim 1, **characterized in that** the design features of bearing bores (14, 15) in thrust bearings (16, 17) for camshafts (12, 13), bores (38, 39) for bucket tappets (36, 37), bores (36, 37) for valve guides (30, 31) or the like of the first cylinder-head variant (5) and of the second cylinder-head variant (6) coincide.

4. Cylinder heads according to one or more of the preceding Claims, **characterized in that** the bucket tappets (36, 37), the valve guides (30, 31) or the like for the first cylinder-head variant (5) and the second cylinder-head variant (6) are identical parts.

5. Cylinder heads according to one or more of the preceding Claims, **characterized in that** the second cylinder-head variant (40) is tilted by a base edge (41), situated on the plane (A-A), of a first longitudinal side (42) of the second cylinder-head variant (40), wherein the injection nozzles (32') are provided on the opposite second longitudinal side (43) of the second cylinder-head variant (40).

6. Cylinder heads according to Claim 5, **characterized in that** the side (44) of the second cylinder-head variant (40) remote from the plane (A-A) is constructed in the form of an inclined plane.

## Revendications

1. Série de culasses pour un moteur à combustion interne avec soupapes d'admission et soupapes d'échappement pour la commande d'échange des gaz dans des chambres de combustion des culasses, lesquelles soupapes sont actionnées au moyen d'au moins un arbre à cames, **caractérisée en ce qu'**un système de culasse (4), comprenant les soupapes d'admission (7) et les soupapes d'échappement (8), présente des caractéristiques de construction qui conviennent aussi bien à une première variante de culasses (5) avec injection par tube d'aspiration qu'à une deuxième variante de culasse (6) avec injection directe, de façon qu'au moins les caractéristiques de construction que sont les angles de soupape (α,α') entre les soupapes d'admission (7) et les soupapes d'échappement (8) de la première variante de culasse (5) et de la deuxième variante de culasse (6) coïncident, seule la deuxième variante de culasse (6) étant pourvue d'une ou de plusieurs ouvertures pour une ou plusieurs buses d'injection (32) insérées depuis un côté longitudinal (34) de la deuxième variante de culasse (6), lesquelles s'étendent suivant un angle aigu (β) par rapport à un plan (A-A) s'étendant entre la deuxième variante de culasse (5) et un carter de cylindre (2).

2. Culasses selon la revendication 1, **caractérisées en ce que** les caractéristiques de construction constituées par la position centrale d'une ou de plusieurs bougies d'allumage (35) entre les soupapes d'admission (7) et les soupapes d'échappement (8) de la première variante de culasse (5) et de la deuxième variante de culasse (6) coïncident.

3. Culasses selon la revendication 1, **caractérisées en ce que** les caractéristiques de construction que sont les perçages d'appui (14, 15) dans des points d'appui (16, 17) pour des arbres à cames (12, 13), les perçages (38, 39) pour les culbuteurs (36, 37), les perçages (36, 37) pour les guides de soupape (30, 31) ou similaires de la première variante de culasse (5) et de la deuxième variante de culasse (6), coïncident.

4. Culasses selon une ou plusieurs des revendications précédentes, **caractérisées en ce que** les culbuteurs (36, 37), les guides de soupape (30, 31) ou similaires pour la première variante de culasse (5) et la deuxième variante de culasse (6) sont des pièces identiques.

5. Culasses selon une ou plusieurs des revendications précédentes, **caractérisées en ce que** la deuxième variante de culasse (40) est basculée sur un bord de base (41) reposant sur le plan (A-A), d'un premier côté longitudinal (42) de la deuxième variante de culasse (40), les gicleurs (32') étant prévus sur le deuxième côté longitudinal (43) opposé de la deuxième variante de culasse (40).

6. Culasse selon la revendication 5, **caractérisée en ce que** le côté (44) éloigné du plan (A-A), de la deuxième variante de culasse (40) est réalisé en tant que plan incliné.
